# EUROPÄISCHE PATENTSCHRIFT

(11) **EP 1 386 141 B1**
(45) Veröffentlichungstag und Bekanntmachung des Hinweises auf die Patenterteilung: **04.04.2012**
(21) Anmeldenummer: 02742731.9
(22) Anmeldetag: 08.05.2002
(51) Int. Cl.: G01N 21/88, G01N 21/25, G01B 11/25, G01B 11/30

(54) **VERFAHREN UND VORRICHTUNG ZUR BERÜHRUNGSFREIEN UNTERSUCHUNG EINES GEGENSTANDES, INSBESONDERE HINSICHTLICH DESSEN OBERFLÄCHENGESTALT**
METHOD AND DEVICE FOR EXAMINING AN OBJECT IN A CONTACTLESS MANNER, ESPECIALLY FOR EXAMINING THE SURFACE FORM OF THE SAME
PROCEDE ET DISPOSITIF D'EXAMEN SANS CONTACT D'UN OBJET, EN PARTICULIER POUR L'EXAMEN DE LA FORME SUPERFICIELLE DUDIT OBJET

(30) Priorität: 08.05.2001 DE 10122313
(43) Veröffentlichungstag der Anmeldung: 04.02.2004
(73) Patentinhaber: Weinhold, Wolfgang P., 97070 Würzburg (DE)
(72) Erfinder: Weinhold, Wolfgang P., 97070 Würzburg (DE)
(86) Internationale Anmeldenummer: PCT/DE2002/001667
(87) Internationale Veröffentlichungsnummer: WO 2002/090952

(56) Entgegenhaltungen:
- EP-A- 0 898 163
- DE-A- 3 413 838
- DE-A- 19 909 534
- US-A- 5 392 125
- US-A- 6 064 478
- PATENT ABSTRACTS OF JAPAN vol. 2000, no. 02, 29. Februar 2000 (2000-02-29) & JP 11 311510 A (ASAHI GLASS CO LTD), 9. November 1999 (1999-11-09)

## Beschreibung

Die Erfindung bezieht sich auf ein Verfahren zur Untersuchung eines Gegenstandes, insbesondere hinsichtlich dessen Oberflächengestalt nach dem Oberbegriff des Anspruchs 1 sowie auf eine Vorrichtung zur Durchführung des Verfahrens nach dem Oberbegriff des Anspruchs 5.

Es sind bereits Verfahren und Vorrichtungen bekannt, welche die Gestalt der Oberfläche von Gegenständen berührungslos unter Zuhilfenahme optischer Hilfsmittel untersuchen. So können auf Oberflächen durch Verwendung von Streif- bzw. Schräglicht, das die Oberfläche schräg oder unter flachem Winkel beleuchtet, auf einfache Weise z.B. aufliegende Schmutzpartikel, Unebenheiten, raue Stellen, Bearbeitungsspuren, etc. lokalisiert und quantifiziert werden. Dies beruht auf der Tatsache, dass je nach Ausprägung dieser Abweichungen gegenüber einer Sollgestalt mehr oder minder stark ausgeprägte Hell-/Dunkelfelder z.B. aufgrund beleuchteter und verschatteter Talflanken entstehen, die wiederum Rückschlüsse auf die dreidimensionale Oberflächengestalt erlauben. Diese Vorgehensweise ist unter der Bezeichnung Streiflicht- oder Schräglichtverfahren hinlänglich, z.B. aus DE 197 16 264 A1 bekannt und wird in umgekehrter Weise auch bei der Herstellung von topographischen Landkarten vereinfacht eingesetzt, um der ebenen Karte durch einen gedachten Lichteinfall anschaulich einen plastischen Eindruck der Geländerform zu verleihen; der gewünschte Effekt wird dort als Schummerung oder Schattenplastik bezeichnet. Allgemein besteht ein funktionaler Zusammenhang zwischen dem Einfallswinkeln des Lichtes, der räumlicher Orientierung und der Position einer Teilfläche, insbesondere deren Neigung und Höhe, und dem Ausfallwinkel des reflektieren Lichts. Das reflektierte Licht wird von einem im Wesentlichen senkrecht zur Oberfläche stehendem opto-elektronischen Sensor, beispielsweise einem Zeilen-oder Matrixsensor, als Grauwertinformation erfasst und anschließend einer digitalen Bildverarbeitung zugeführt. Dieses Verfahren eignet sich besonders bei punktuellen, linienartigen oder häufig wiederkehrenden Gestaltabweichungen wie z.B. bei Verschmutzungen und Kratzern.

Weiterhin ist das sogenannte Streifenlichtverfahren bekannt, bei dem auf die Oberfläche eines Gegenstandes mit Hilfe einer Lichtquelle ein geometrisch definiertes Muster, beispielsweise helle und dunkle Streifen mit Hilfe einer Lichtquelle projiziert wird. Je nach Ausprägung von Erhebungen oder Vertiefungen der Oberfläche wird das projizierte Muster deformiert, so sind beispielsweise bei eine der Lichtquelle mehr zugewandten Teilfläche Breite und Abstand der Streifen verringert, bei einer der Lichtquelle mehr abgewandten Teilfläche, z.B. Vertiefung, sind diese hingegen vergrößert. Nachdem das reflektierte Licht ebenfalls mit einem opto-elektronischen Sensor erfasst und dessen Messwerte einer bildverarbeitenden Auswertung zugeführt wurden, kann über geeignete Algorithmen aus der Deformation des Muster ein dreidimensionales Oberflächenmodell abgeleitet werden. Dieses, u.a. aus DE 197 30 885 A1 bekannte Verfahren, auch codiertes Lichtverfahren oder Projektionsverfahren genannt, bietet sich insbesondere an, wenn eine detailreiche Oberflächenstruktur mit entsprechendem Hell-/Dunkelkontrast nicht vorhanden ist, z.B. bei eine glatten, jedoch in fehlerhafter Weise mit großflächigen Wölbungen versehenen Oberflächen.

Sowohl beim Streiflicht- als auch beim Streifenlichtverfahren wird das von einer Lichtquelle emittierte Licht von der Oberfläche in Abhängigkeit der Oberflächengestalt reflektiert. Die von einem Bildsensor erfasste Helligkeits- bzw. Grauwertverteilung ist mehr oder minder streng mit dieser Oberflächengestalt korreliert.

Diese bekannten Verfahren und Vorrichtungen weisen jedoch u.a. den Nachteil auf, dass sie im Wesentlichen nur dreidimensionale Gestaltmerkmale, d.h. geometrische Daten der Oberfläche des Gegenstandes liefern können. Zudem gelten die funktionalen Zusammenhänge zwischen Helligkeitsverteilung und Oberflächengestalt in strenger Weise nur für eine Oberfläche mit konstanten Materialeigenschaften. Besteht die Oberfläche aus verschiedenen, benachbarten Materialien, welche unterschiedliche gestaltunabhänige bzw. photometrische Eigenschaften wie z.B. Reflexions-, Transmissions- und Absorptionsparameter aufweisen, so verfälschen diese das Messergebnis. Das bedeutet, dass sich die in den vorbeschriebenen Verfahren erwünschte Helligkeitsverteilung bei Gestaltabweichungen mit Helligkeitswerten mehrfarbiger, gemusterter oder marmorierter Flächenteilen, die nicht von einer Sollgestalt abweichen, überlagert wird, so dass dem resultierenden Helligkeitswert nicht mehr eindeutig eine bestimmte Gestalt, z.B. Talflanke der Neigung x, oder ein bestimmtes Material, z.B. Verunreinigung mit dem. gestaltunabhänigen bzw. materialspezifischen Grauwert y, zugeordnet werden kann.

Aus der DE 198 39 882 ist eine Beleuchtungsanlage zur Abmusterung von lackierten Oberflächen von Karosserien bekannt, beim der mit unterschiedlich angeordneten und ausgeführten Beleuchtungsquellen zum einen Gestaltmerkmale und zum anderen gestaltunabhängige Merkmale, wie materialspezifische Parameter wie z.B. Farbfehler, erzielt werden sollen. Es wird zwischen einer Grundbeleuchtung, deren Licht vorzugsweise unter einem Einfallswinkel von 45° auf die Karosserieoberfläche trifft, als Arbeitsbeleuchtung für Reparaturarbeiten dient und zugleich zur Erkennung von Farb-oder Polierfehler vorgesehen ist und einer Strukturbeleuchtung mit speziell ausgeführten, linienartigen, ebenfalls unter einem Winkel von etwa 45° abstrahlenden Lichtquellen, mit deren Hilfe Verwerfungen in der Oberfläche, z.B. Dellen, erkannt werden sollen, unterschieden. Die Beleuchtungsanlage ist als große, stationäre Vorrichtung ausgebildet, durch welche die zu untersuchenden Kraftfahrzeuge geführt werden und sich Personen zu Reparaturarbeiten sowie zur manuellen Abmusterung der Karosserieoberfläche aufhalten. Nachteilig ist, dass eine Person zur Erkennung der verschiedenen Fehlerarten den Blickwinkel ändern muss und dabei zwangsläufig nicht mehr ein und dasselbe Oberflächensegment betrachten kann. Möchte die Person dasselbe Oberflächensegment bezüglich beider Fehlerarten beurteilen, so muss diese zudem die Position verändern. Außerdem ist so nur eine Beurteilung entweder einer nicht-topografischen Fehlerart, wie z.B. Verschmutzungen oder Farbfehler, oder einer topografischen Fehlerart, wie z.B. Beulen, möglich. Eine kombinierte Bewertung findet nicht statt. In vergleichbarer Weise gilt dies ebenso für eine als Ersatz der visuellen Wahrnehmung einer Person eingesetzten Kamera. Das Verfahren erscheint insgesamt kompliziert und aufwändig in der Durchführung, und es ist nur bei glänzenden Oberflächen Flächen anwendbar. Die Dimensionen der Beleuchtungsanlage erlauben nur einen stationären Einsatz.

Ferner wird in der DE 35 40 288 A1 eine Anordnung und ein Verfahren zur Durchführung von Kontrollen an Lötstellen beschrieben, beim dem Licht unter verschiedenen Einfallswinkeln auf Lötstellen einer Platine gerichtet und das von der Lötstelle reflektierte Licht von einem oder mehreren schwarz/weiß-Bildsensoren erfasst wird und so eine Mehrzahl von Bildern mit unterschiedlichem, vom Einfallswinkel abhängigen Informationsgehalt erzeugt wird. Bei einer anschließenden rechentechnischen Synthese der Bilder kann auf die Richtigkeit der Gestalt der Lötstelle rückgeschlossen werden. Da stets das gleiche Material untersucht wird, erfolgt eine Verknüpfung von Gestaltmerkmalen und gestaltunabhängigen Merkmalen nur in der Weise, dass - nachdem die Gestaltmerkmale bereits abschließend erzeugt wurden - eine Entscheidung vorgenommen wird, ob - falls eine ausgeprägte Form der Lötstelle nicht festzustellen war - eine Stelle mit nur sehr wenig Lot, eine Leiterbahn ohne Lot oder das Leiterplattenmaterial vorliegt. Eine kombinierte Datenprozessierung zur Verminderung gestaltunabhängiger Fehlereinflüsse ist hier nicht vorgesehen. Die Anordnung selbst besteht aus einem stationären Gehäuse, in dem mehrere Lichtquellen angeordnet sind, die in verschiedenen Winkeln auf die Lötstelle abstrahlen. Das Gehäuse weist ferner eine zur Lötstelle gerichteten Beleuchtungsöffnung und eine zweite Öffnung auf, durch die mehrere dem Gehäuse zugeordnete Kameras das von der Lötstelle reflektierte Licht erfassen können. Unter dem Gehäuse bzw. dessen Beleuchtungsöffnung befindet sich die auf einem X/Y-Tisch beweglich angeordnete Platine mit Lötstellen. Bei der Anordnung ist nachteilig, dass diese ebenfalls nur für einen stationären Betrieb z.B. in einer Fertigungsstraße vorgesehen ist. Zudem ist das Gehäuse von der Platine beabstandet, so dass hier, wie auch bei der zweiten Öffnung des Gehäuses, störender Fremdlichteinfall zu befürchten ist.

Die DE 199 09534 A offenbart eine Vorrichtung zur quantifizierten Bestimmung der Qualität strukturierter Oberflächen. Mittels zweier optischer Einrichtungen werden zwei Bilddatemnengen gewonnen, die jeweils für sich und unabhängig von der jeweils anderen Bilddatenmenge ausgewertet werden, um eine Strukturkennzahl bzw. einen Farbkennwert für die zu untersuchende Oberfläche herzuleiten.

Die EP 0 898 163 A1 offenbart ein Verfahren und eine Vorrichtung zur automatischen Inspektion sich bewegender Oberflächen. Die zu inspizierende Oberfläche wird mittels drei unterschiedlicher Beleuchtungs-/Beobachtungskanäle unter verschiedenen Beobachtungsbedingungen beobachtet, um drei Signale zu gewinnen, aus denen die physikalischen Eigenschaften der Oberfläche hergeleitet werden

Es ist Aufgabe der Erfindung, ein Verfahren und eine Vorrichtung der eingangs genannten Art bereitzustellen, die es ermöglichen, die Oberflächenbeschaffenheit eines Gegenstandes möglichst einfach und fehlerarm zu bestimmen sowie verschiedenste Anwendungsfälle flexibel abzudecken.

Diese Aufgabe wird durch ein Verfahren und eine Vorrichtung mit den Merkmalen des Patentanspruchs 1 bzw. 5 gelöst. Vorteilhafte Weiterbildungen sind in den entsprechend rückbezogenen Unteransprüchen gekennzeichnet.

Demgemäß nehmen ein mehrere Lichtquellen enthaltendes, eine Beleuchtungsöffnung aufweisendes Gehäuse der Vorrichtung und ein Gegenstand zueinander eine Stellung bzw. eine gegenseitige Position ein. Danach wird ein Oberflächensegment des Gegenstandes durch die Beleuchtungsöffnung des Gehäuses nacheinander unter verschiedenen Einfallswinkeln mit Licht bestrahlt und das von dem Oberflächensegment je Einfallswinkel abstrahlende bzw. reflektierte Licht von mindestens einem Bildsensor erfasst. Je Einfallswinkel und je Bildsensor wird dann von dem Oberflächensegment mindestens eine Bilddatenmenge erzeugt wird, wobei aus mindestens einer ersten Bilddatenmenge Gestaltmerkmale und aus mindestens einer zweiten Bilddatenmengen gestaltunabhängige Merkmale abgeleitet werden. Erfindungswesentlich ist, dass zum Einnehmen der gegenseitigen Stellung das Gehäuse ortsfest gehalten und das Gehäuse freibeweglich von einer Bedienperson auf die Oberfläche des Gegenstandes annähernd lichtdicht angelegt oder unter Kontakt mit der Oberfläche verschoben wird, und dass vor der Ableitung von Gestaltmerkmalen aus der ersten Bilddatenmenge die erste Bilddatenmenge mit der zweiten Bilddatenmenge um verfälschende Einflüsse gestaltunabhängiger Merkmale reduziert wird.

Wie aus dem Stand der Technik bekannt ist, ist dabei die Art der Lichtquellen unterschiedlich, d.h. diese erfüllen je nach Einfallswinkel unterschiedliche Aufgaben. So sind erfindungsgemäß Lichtquellen einer erster Art vorgesehen, die auf die Oberfläche in der Weise als Streif-/Schräglichtbeleuchtung bzw. in einem schrägen bis flachen Einfallswinkel ausgerichtet sind, dass aus dem reflektiertem Licht Gestaltmerkmale der Oberflächen ableitbar sind, insbesondere Abweichungen von einer Sollgestalt, wie z.B. aufliegende Verunreinigungen, Bearbeitungsspuren, Kratzer oder allgemeine Inhomogenitäten gegenüber einer gleichmäßig strukturierten Solloberfläche. Die Lichtquellen der anderen zweiten Art sind auf die Oberfläche in der Weise als Auflicht-oder Durchlichtbeleuchtung bzw. in einem schrägen bis senkrechten Einfallswinkel ausgerichtet, dass aus dem reflektierten oder transmittierten Licht materialspezifische, d.h. gestaltunabhängige Merkmale wie z.B. Materialdichte, Farbe, Feuchtigkeit, Wärme ableitbar sind.

Vorteilhaft ist hierbei, dass mit einem einzigen Verfahren und einer einzigen Vorrichtung für jedes Oberflächensegment der Oberfläche, den aus ersten Bilddatenmenge ableitbaren Gestaltmerkmalen das aus der zweite Bilddatenmenge ableitbare optische Erscheinungsbild bzw. materialspezifische Eigenschaften zuordenbar sind. Das bedeutet, dass die Bilddatenmengen untereinander in jedem Bildelement verknüpft bzw. aufeinander bezogen werden können, was die Bewertung der einzelnen Bilddatenmengen wesentlich erleichtert und zuverlässiger macht. So kann z.B. bei bedrucktem Papier sowohl die Struktur der Oberfläche, die sog. Papierrauheit, als auch das Druckvolumen, das durch das Aufbringen der Druckfarbe entstanden ist, differenziert ermittelt und mit der Oberflächenstruktur korreliert werden. Insbesondere erlauben es das erfindungsgemäße Verfahren und die Vorrichtung, die Merkmale unterschiedlicher Materialien bei bzw. noch vor der Ableitung von Gestaltmerkmalen aus der ersten Bilddatenmenge zu berücksichtigen. So kann beispielsweise unter Verwendung geeigneter Rechenalgorithmen der verfälschende Einfluss eines dunkelgrau bedruckten Bereiches auf ein abzuleitendes Gestaltmodell durch Einbezug der zweiten Bilddatenmenge entsprechend reduziert bzw. kalibriert werden. Erst aus der zweiten Bilddatenmenge ist nämlich deutlich ersichtlich, dass sich dort ein dunkler Bereich und nicht eine verschattete Talflanke befindet, wie aus einer ausschließlichen Bewertung der ersten Bilddatenmenge vermutet werden müsste. Selbstverständlich kann diese Kalibrierung in idealer Weise auch für mehrfarbige, gemusterte, marmorierte oder aber auch für Oberflächen mit sehr schwachen, mit bloßem Auge nicht sichtbaren Farbinhomogenitäten erfolgen.

Bei der gattungsgemäßen Vorrichtung ist weiterhin besonders vorteilhaft, dass deren Gehäuse in Art eines Handgerätes ausgeführt ist und von einer Bedienperson vorzugsweise von Hand freibeweglich auf beliebige Oberflächensegmente des Gegenstandes direkt aufgelegt oder dorthin verschoben werden kann. Es ist nicht notwendig das Gehäuse zur Untersuchung einer benachbarten Stelle von der Oberfläche abzuheben und wieder aufzusetzen, was bei großflächigen Untersuchungen sehr lästig sein kann und was zudem die meist empfindlichen opto-elektronischen Bauteile unnötig strapazieren oder dejustieren kann. Genauso wenig braucht der Gegenstand an bzw. unter die Beleuchtungsöffnung des Gehäuse, z.B. über eine Fertigungsstraße herangeführt werden, um die gegenseitige Mess- bzw. Untersuchungsstellung zu erreichen, da der Gegenstand gattungsgemäß ortsfest ist. Zudem kann hierbei meist kein unmittelbarer Kontakt zwischen dem Gehäuse und der Oberfläche hergestellt werden, so dass stets, im Gegensatz zur gattungsgemäßen Vorrichtung, mit einem Fremdlichteinfall zu rechnen ist. Um das Gehäuse der gattungsgemäßen Vorrichtung handlich bzw. kompakt zu halten ist der Bildsensor in einer vorteilhaften Ausführungsform bereits im Gehäuse integriert. Dies hat den zusätzlichen Vorteil, dass der Abstand zwischen dem Bildsensor und dem zu untersuchenden Oberflächensegment stets konstant bleibt und nicht durch äußere Einflüsse verstellt werden kann; eine gesonderte Autofokus- oder Justierfunktion kann somit entfallen. Zudem kann bei einem im Gehäuse angeordneten Bildsensor dessen Optik nicht so leicht verschmutzen oder gar beschädigt werden. Eine weitere vorteilhafte Verkleinerung des Gehäuses wird ermöglicht, wenn der Abstand zwischen der im Gehäuse angeordneten mindestens einen Lichtquelle zweiter Art und der Oberfläche größer oder gleich dem Abstand zwischen dem Lichtsensor und der Oberfläche ist. Werden die Lichtquellen zweiter Art beispielsweise in Nachbarschaft des Bildsensors hinterhalb dessen Optik angeordnet, so ermöglicht dies eine noch kompaktere Bauweise. Die Gesamtheit dieser Maßnahmen ermöglicht ein flexibles und universelles Hantieren mit der erfindungsgemäßen Vorrichtung. Diese kann insbesondere zum Transport oder zur Aufbewahrung in einem kleinen Gerätekoffer geschützt verpackt werden.

In einer vorteilhaften Weiterbildung des Erfindungsgedankens wird an Stelle oder ergänzend zum Streif- bzw. Schräglicht mit einer weiteren Lichtquelle erster Art zur Erzeugung einer ersten Bilddatenmenge ein geometrisch definiertes Muster auf die Oberfläche des Gegenstandes projiziert. Dazu ist dieser weiteren Lichtquelle beispielsweise eine dem Muster entsprechende Lochblende innerhalb des Strahlenganges zugeordnet. Auch hier steigert die erfindungsgemäße Kalibrierung der erste Bilddatenmenge mit Hilfe der zweiten Bilddatenmenge die Qualität des Auswerteergebnisses. Ergänzend ist hierbei an Verfahren zu denken, bei denen sich die projizierten Muster mehrerer Streifenlichter, die an verschiedenen Orten positioniert sind, auf der Oberfläche überlagern.

Als besonders vorteilhaft erweist sich, wenn eine zusätzliche Lichtquelle der zweiten Art als Durchlichtquelle vorgesehen ist, mit der Licht durch den Gegenstand in das Gehäuse transmittiert wird. Dabei ist diese Lichtquelle zweiter Art außerhalb des Gehäuses auf der dem Bildsensor gegenüberliegenden Seite des Gegenstandes angeordnet, vorzugsweise mit zur Oberfläche im Wesentlichen senkrechten Einfallswinkel. Dadurch lassen sich transparente, transluminente oder perforierte Materialen, beispielsweise Papier oder Folien, mittels Durchlichtbeleuchtung untersuchen. Das transmittierte Licht wird wiederum vom Bildsensor erfasst und aus dessen Messwerte eine zusätzliche zweite Bilddatenmenge erzeugt. Dabei ist es besonders von Vorteil, dass das Transmissionsverhalten direkt Rückschlüsse auf die Dichteverteilung, z.B. die Wolkigkeit des Zellstoffes bei Papieren, zulässt und diese Information mit der ersten Bilddatenmenge ortsgetreu in vorgenannter Weise verknüpft werden können, d.h. es ist möglich, die Auswirkungen von Diskontinuitäten innerhalb des Materials mit möglichen Gestaltabweichungen an der Oberfläche gemeinsam zu beurteilen. Die als Durchlichtbeleuchtung ausgeführte Lichtquelle kann konstruktiv mit den übrigen Komponenten der Vorrichtung fest verbunden oder vorzugsweise getrennt von dieser in konstantem Abstand angeordnet sein. Bei einer Prüfstrasse könnte beispielsweise eine solche Lichtquelle stationär unterhalb des zu prüfenden Gegegenstandes installiert sein, z.B. als Leuchttisch mit mehren solcher Lichtquellen, wohingegen die übrigen Komponenten in einem Gehäuse überhalb des Gegenstandes transportabel oder auch fest installiert sind. Die Steuerung einer konstruktiv und elektrisch unabhängigen Durchlichtquelle kann, sofern diese nicht permanent aktiviert ist, beispielsweise funkferngesteuert erfolgen.

Von Vorteil ist, dass verschiedenste Kombinationen der Lichtquellen erster und zweiter Art unter Berücksichtigung des zu untersuchenden Gegenstand und dem Untersuchungszweck möglich sind, z.B. Auflicht mit Streiflicht, Auflicht mit Streifenlicht, Auflicht und Durchlicht mit Streiflicht oder Auflicht und Durchlicht mit Streifenlicht. Verfahren und Vorrichtung eignen sich daher in besondere Weise zu Qualitätskontrollen in Verbindung mit Sollwerten von Mustergegenständen und zu Dokumentationszwecken beispielsweise zur herstellungsbegleitenden Kontrolle von Bahnmaterialien oder zur Qualitätskontrolle von Karosserieoberflächen. Aber auch beispielsweise im medizinischen Bereich finden diese Anwendung, indem z.B. Anzahl, Flächen und Volumina von Muttermalen auf der Haut in Zeitintervallen überwacht werden können.

Bei der erfindungsgemäßen Vorrichtung kommt ein Bildsensor zum Einsatz, der als optoelektrischer Einzelsensor, der die Oberfläche sequentiell beispielsweise mit schwingenden oder rotierenden Spiegelflächen abtastet bzw. scannt, aber auch als Zeilen- oder vorzugsweise als Matrixsensor, wie z.B. eine handelsübliche CCD-Kamera, ausgeführt sein kann. Dem Bildsensor ist vorzugsweise eine geeignete Linsenoptik und eine Blendeinheit zugeordnet. Der Bildsensor kann das von dem Gegenstand reflektierte oder transmittierte Licht direkt oder über entsprechende Umlenkeinheiten, wie z.B. Umlenkprismen oder -spiegel, erfassen. Selbstverständlich können auch mehrere Bildsensoren, gleicher oder unterschiedlicher Art, gleichzeitig oder sequentiell eingesetzt und deren Bilddaten kombiniert werden. Es erweist sich jedoch als vorteilhaft, wenn bei der pixel- bzw. bildelementweisen Verknüpfung der ersten und der zweiten Bilddatenmenge diese von dem selben Bildsensor erzeugt wurden. Auf diese Weise können aufwändige Justierarbeiten entfallen, die sonst erforderlich wären, um die Bilddatenmengen exakt zu überlappen, was zudem meist nicht hundertprozentig gelingt.

Ferner ist es vorteilhaft einen Farb- oder Multispektralsensor zu verwenden, das sich der Informationsgehalt der zweiten Bilddatenmenge hinsichtlich materialspezifischer Merkmale deutlich erhöht. Insbesondere ist das Spektrum des Bildsensors nicht auf den sichtbaren Bereich des Lichts beschränkt.

Der Bildsensor ist vorzugsweise so angeordnet, dass er mit seiner optischen Achse direkt oder über Umlenkeinheiten das von der Oberfläche reflektierte oder transmittierte Licht in einem Winkel zur Oberfläche von ca. 60° bis 90°, vorzugsweise in der Senkrechten, erfassen kann. Die erfassten Rohdaten werden einer Steuer-/Auswerteeinheit zugeführt bzw. von dieser abgerufen. Dort können aus den Rohdaten dann die Bilddatenmengen erzeugt werden und eine weiteren Auswertung, insbesondere einer gemeinsamen zugeführt werden.

Die verwendeten Lichtquellen können als einfache Glühlämpchen, als Entladungslampen oder vorzugsweise als Halbleiterstrahlungsquellen, wie z.B. sog. LEDs, ausgeführt sein. Bei letzteren ist insbesondere von Vorteil, dass durch Ansteuerung verschiedene Lichtspektren erzeugt und für die Untersuchung des Gegenstandes herangezogen werden können. Günstig wirkt sich zudem deren schmalbandige Abstrahlcharakteristik aus. Auch die Verwendung von monochromatischem Licht ist denkbar. Außerdem ist das Spektrum der Lichtquellen nicht auf das sichtbare Licht beschränkt. Den Lichtquellen sind vorzugsweise Linsenoptiken zugeordnet, mit deren Hilfe ein gewünschter Abstrahlwinkel erzielbar ist. Insbesondere weisen die Lichtquellen erster Art eine schmalen Abstrahlwinkel oder gar keine Strahldivergenz auf. Die Form der Lichtquellen kann beispielsweise beim Auflicht als Ringbeleuchtung und beim Streiflicht als lineare Anreihung mehrerer Einzellichtquellen (z.B. LED-Reihe) ausgebildet sein. Selbstverständlich können die Lichtquellen einzeln, beliebig kombiniert oder vorzugsweise artweise bzw. in Abhängigkeit ihres Einfallswinkels nacheinander ein- und ausschaltbar sein. Ein Betrieb mit ständiger Aktivierung ist auch denkbar, wobei dann die Lichtquellen beispielsweise dimmbar, d.h. in der Helligkeit regelbar sein können.

Der Einfallswinkel der Lichtquellen erster Art kann zwischen 5 und 20°, vorzugsweise 7°, und der Einfallswinkel der Lichtquellen zweiter Art zwischen 45° und 90°, vorzugsweise 60° sein. Werden mehrere Lichtquellen derselben Art installiert, so kann es von Vorteil sein, wenn diese in verschiedenen, vorzugsweise regelmäßigen Horizontalrichtungen auf die Oberfläche abstrahlen bzw. um diese angeordnet sind. Auf den Gegenstand gerichtete Lichtquellen können entsprechend durch Kombinationen von Umlenkeinheiten, z.B. Prismen, Spiegel oder Lichtleiter, mit andern, beispielsweise externen Lichtquellen gleichwertig ersetzt. Vorzugsweise sind diese Umlenkeinheiten beweglich ausgeführt, so dass die Art der Lichtquelle bzw. der Einfallswinkel frei wählbar ist.

Bildsensor und Lichtquellen der erfindungsgemäßen Vorrichtung sind an einer, vorzugsweise im Innern des Gehäuses angeordneten Steuer- und/oder Auswerteeinheit angeschlossen, die über ein an der Gehäuseaußenseite vorgesehenes Display und/oder Bedieneinheit von einer Bedienperson gesteuert werden kann. Die Steuer- und/oder Auswerteeinheit kann über eine Schnittstelle mit einer externen Rechnereinheit verbunden sein und mit dieser Signale, insbesondere Bilddaten austauschen. Bildsensor und Lichtquellen sind zudem an eine Stromversorgung angeschlossen, die vorzugsweise im Inneren des Gehäuses angeordnet.ist. Die Stromversorgung kann jauch über die Rechnereinheit erfolgen.

Nachfolgend wird die Erfindung anhand zweier Ausführungsbeispiele unter Bezug auf die Zeichnung näher erläutert.

Es zeigen:
- Fig. 1: eine Schnittansicht der erfindungsgemäßen Vorrichtung, dessen Gehäuse mit einer Hand auf einen Gegenstand aufgelegt ist,
- Fig. 2: eine erste Bilddatenmenge des Gegenstandes gemäß Fig. 1,
- Fig. 3: eine zweite Bilddatenmenge des Gegenstandes gemäß Fig. 1, und
- Fig. 4: eine schematische Darstellung der Vorrichtung.

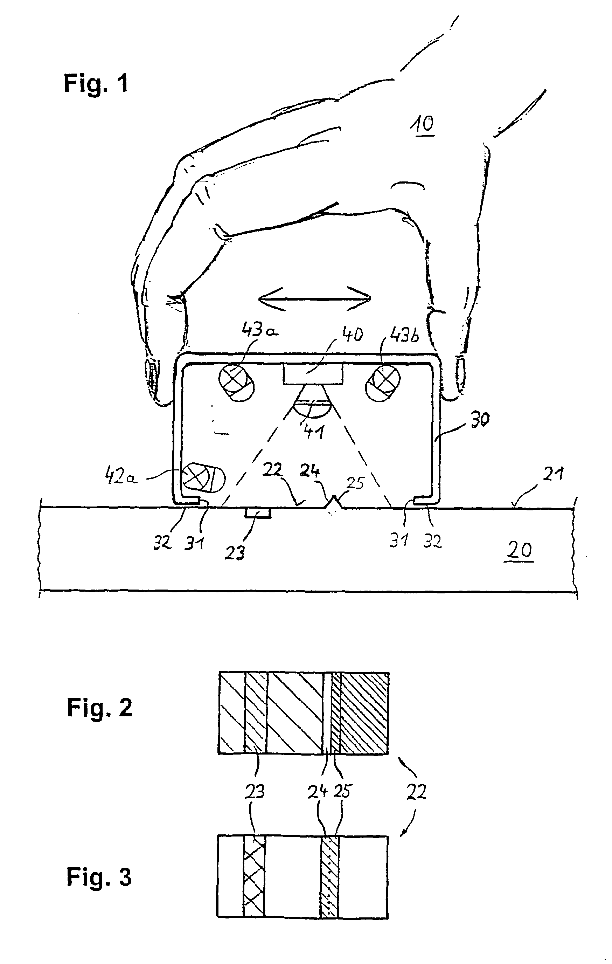

In Fig. 1 ist eine Hand 10 ersichtlich, die das leicht greifbare Gehäuse 30 der erfindungsgemäßen Vorrichtung mit ihren Finger berührt. Wie mit einem Doppelpfeil anschaulich dargestellt, kann das Gehäuse 30 mittels einer seitlichen Bewegung der Hand 10 gegenüber der Oberfläche 21 eines ortsfesten Gegenstandes 20 seitlich verschoben werden, nachdem es auf diesen aufgelegt bzw. aufgesetzt wurde. Das Gehäuse 30 liegt dabei mit seinen Auflageflächen 32 annähernd lichtdicht auf der Oberfläche 21 auf, d.h. dass durch die zwischen den Rändern 31 vorgesehenen Beleuchtungsöffnung kein Fremdlicht von außen in den Innenraum des Gehäuses 30 eindringen kann. Im Inneren des Gehäuses 30 ist an der Gehäuseoberseite ein Bildsensor 40 befestigt, der mit seiner optischen Achse im Wesentlichen senkrecht auf die Oberfläche 21 ausgerichtet ist. Dem Bildsensor 40 ist eine Optik mit Blendeinheit 41 zugeordnet. Die gestrichelten Linien zwischen der Optik mit Blendeinheit 41 und der Oberfläche 21 stellen den Bildwinkel des Bildsensors 40 dar und begrenzen zudem das von diesem erfassbare Oberflächensegment 22, siehe Fig. 1 und 2.

Beidseitig neben dem Bildsensor 40 sind zwei Lichtquellen zweiter Art 43 a und 43 b ebenfalls an der inneren Gehäuseoberseite befestigt. Zu erkennen ist, dass diese mit einem Einfallswinkel von ca. 50° auf die Oberfläche 21 ausgerichtet sind, d.h. diese Lichtquellen erfüllen die Funktion einer Auflichtbeleuchtung, die ein möglichst, für das menschliche Wahrnehmungsvermögen natürlich erscheinendes Bild erzeugt. Außerdem ist im Gehäuse 30 am linken unteren Gehäuserand eine Lichtquelle erster Art 42 a fest angeordnet und mit einem Einfallswinkel von ca. 6° auf die Oberfläche 21 ausgerichtet, d.h. diese Lichtquelle erfüllt die Funktion eines Streiflichts, das ermöglicht, dreidimensionale Gestaltmerkmale in Form von Hell-/Dunkelfelder wahrzunehmen. Den Lichtquellen 43 a, 43 b und 42 a sind jeweils Optiken vorgeschaltet, die deren Abstrahlwinkel vorgeben, wobei die Lichtquellen 43 a und 43 b einen breiteren Abstrahlwinkel aufweisen als die Lichtquelle 42 a. Bei der Lichtquelle 42 a ist, da diese als Streiflicht vorgesehen ist, ein besonders schmaler Abstrahlwinkel wünschenswert. In der Oberfläche 21 ist im Bereich des Oberflächensegments 22 ein Fremdmaterial 23 mit von der sonstigen Oberfläche 21 abweichenden photometrischen Eigenschaften, wie z.B. einer anderen Farbe oder anderen gestaltunabhängige Merkmalen, eingeschlossen. Ferner weist die Oberfläche 21, ebenfalls im Bereich des Oberflächensegments 22, eine Erhebung mit einer ersten, zur Lichtquelle 42 a hingewandten Flanke 24 und einer zweiten, von der Lichtquelle 42 a abgewandeten Flanke 25 auf.

Zur Durchführung des erfindungsgemäßen Verfahrens werden die Lichtquellen ersten und zweiter Art artweise nacheinander eingeschaltet, wobei das jeweils vom Oberflächesegment 22 reflektierte Licht vom Bildsensor 40, hier ohne weitere Umlenkeinheiten, erfasst und eine erste bzw. zweite Bilddatenmenge erzeugt wird.

In Fig. 2 und Fig. 3 sind die erste und die zweite Bilddatenmenge dargestellt, wie sie vom Bildsensor 40 vom Oberflächensegment 22 unter Verwendung der in Fig. 1 vorbeschrieben Lichtquellen erster und zweiter Art erzeugt wurden, d.h. Fig. 2 stellt die Bilddatenmenge zum Streiflicht und Fig. 3 die Bilddatenmenge zum Aufficht dar. Die unterschiedlichen Schraffuren stehen für unterschiedliche Grauwerte, wobei gilt: Je dichter die Schraffur desto dunkler ist der Grauwert. Aus Fig. 2 ist demnach ersichtlich, dass die zur Lichtquelle 42 a hingewandeten Flanke 24 der hellste Bereich ist, weil die Flanke 24 stark geneigt ist und nahezu im rechten Winkel beleuchtet wurde, und die der Lichtquelle 42 a abgewandten Flanke 25 der dunkelste Bereich ist, weil diese von der Erhebung total verschattet wurde. Der Bereich rechts neben der Flanke 25 besitzt einen vergleichbar dunklen Grauwert, da dieser ebenfalls von der Erhebung mit den Flanken 24 und 25 verschattet wurde. Die Bereiche beidseitig dem Fremdmaterial 23 haben erwartungsgemäß den selben geringen Grauwert, da diese ebenen Abschnitte des Oberflächensegments 22 unter dem selben Einfallswinkel bestrahlt wurden. Das Fremdmaterial 23 weist einen materialspezifischen, nur bedingt aussagekräftigen Grau-oder Farbwert auf. Wird nun versucht ausschließlich auf Basis dieser ersten Bilddatenmenge Gestaltmerkmale des Oberflächensegments 22 abzuleiten, so werden für den Bereich des Fremdmaterials 23 sowie für den Bereich rechts neben der Flanke 25 die zugehörigen Gestaltparameter fehlerhaft sein. Die zugehörigen Grauwerte dieser Bereiche sind dunkler sind als die Grauwerte zu den anderen ebenen Flächen beidseitig des Fremdmaterials 23 und deuten somit fälschlicher Weise auf eine mittlere bis starke Neigung in diesen Bereichen hin.

Durch rechnerische Berücksichtigung der zweiten Bilddatenmenge in Fig. 3 für die Ableitung von Gestaltparameter aus der ersten Bilddatenmenge gemäß Fig. 2 kann der verfälschende Einfluss reduziert werden. So ist das Fremdmaterial 23 in der zweiten Bilddatenmenge beispielsweise als zum restlichen Oberflächensegment 21 andersfarbig erkennbar, siehe Kreuzschraffur. Mit Hilfe dieser Information kann der Farbeinfluss in der ersten Bilddatenmenge vor Ableitung von Gestaltparametern "ausgefiltert" werden. Die Flanken 24 und 25 sind gleich dunkel, weisen aber die selbe Farbe wie das Oberflächensegment 22 auf. Diese Informationen bestätigen die Annahme aus der ersten Bilddatenmenge, dass es sich hierbei tatsächlich um eine Erhebung mit zwei Flanken handelt.

Ergänzend ist denkbar, dass die Lichtquellen 43 a und 43 b nacheinander aktiviert und zwei unterschiedliche zweite Bilddatenmengen erzeugt werden, aus denen sodann die Erhebung mit den Flanken 24 und 25 in Art eines Stereobildes als Gestalt ableitbar ist.

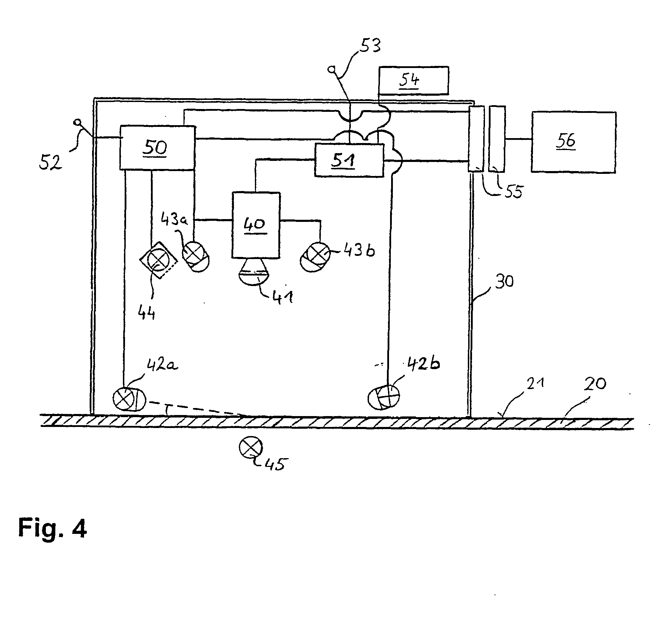

Schließlich ist der Fig. 4 eine erfindungsgemäße Vorrichtung mit einem Blockschaltdiagramm schematisch zu entnehmen. Wie in Fig. 1 liegt das Gehäuse 30 der Vorrichtung auf der Oberfläche 21 des Gegenstandes 20 auf und bedeckt dabei einen Teil der Oberfläche 21. Im Innern des Gehäuses 30 ist wiederum mittig ein über der Oberfläche 21 angeordneter Bildsensor 40 mit einer Optik mit Blendeinheit 41 vorgesehen. Ferner sind wie in Fig. 1 zwei Lichtquellen zweiter Art 43 a und 43 b sowie eine Lichtquelle erster Art 42 a vorgesehen. Zusätzlich ist eine dieser gegenüberliegende, weitere Lichtquelle erster Art 42 b im Gehäuse 20 links angeordnet. Die Lichtquellen der ersten Art 42 a und 42 b sind der Oberfläche 21 nah und strahlen auf diese in einem kleinen bzw. flachen Einfallswinkel ab. Ergänzend ist in diesem Ausführungsbeispiel neben der Lichtquelle 43 a eine als Streifenlichtquelle 44 ausgeführte Lichtquelle erster Art vorhanden, welche auf die Oberfläche 21 ein geometrisch definiertes Muster projizieren kann. Aus der Verformung des Musters kann die Gestalt der Oberfläche 21 abgeleitet werden. Schließlich ist auf der, dem Bildsensor 40 gegenüberliegenden Seite des Gegenstandes 20 eine Lichtquelle zweiter Art 45 vorgesehen. Diese kann den Gegenstand 20, für den Fall, dass dieser transluminent oder perforiert ist, in Richtung des Bildsensors 40 durchleuchten. Die Lichtquelle 45 ist in diesem Ausführungsbeispiel konstruktiv und elektrisch von der übrigen Vorrichtung getrennt. Alle im Gehäuse 8 befindlichen Lichtquellen sowie der Bildsensor 40 sind über nicht näher bezeichnete Leitungen mit einer Steuer-/Auswerteeinheit 50 und mit einer internen Stromversorgung 51 verbunden. Die einzelnen Lichtquellen können über einen ersten Schalter 52 einzeln, kombiniert oder artweise ein- und ausgeschaltet werden. Mit Hilfe eines zweiten Schalters 53 wird die Stromversorgung 53 bzw. alle mit Strom versorgten Komponenten ein- und ausgeschaltet. Neben dem Schalter 53 ist eine Display- und/oder Bedieneinheit angeordnet. An der linken Wand des Gehäuses 30 ist im oberen Bereich eine Schnittstelle 55 angeordnet, welche die Steuer-/Auswerteeinheit 50 und die interne Stromversorgung 51 mit einer externen Rechnereinheit 56 verbindet.

### Bezugszeichenliste

- 10: Hand
- 20: Gegenstand
- 21: Oberfläche des Gegenstandes
- 22: Oberflächensegment
- 23: Fremdmaterial
- 24: erste Flanke einer Erhebung
- 25: zweite Flanke einer Erhebung
- 30: Gehäuse
- 31: Rand der Beleuchtungsöffnung
- 32: Auflagefläche
- 40: Bildsensor
- 41: Optik mit Blendeinheit
- 42 a/b: Lichtquellen erster Art als Streifbeleuchtung
- 43 a/b: Lichtquellen zweiter Art als Auflichtbeleuchtung
- 44: Lichtquelle erster Art als Streifenbeleuchtung
- 45: Lichtquelle zweiter Art als Durchlichtbeleuchtung
- 50: Steuer-/Auswerteelektronik
- 51: interne Stromversorgung
- 52: Schalter für Lichtquellen
- 53: Schalter für Stromversorgung
- 54: Bedieneinheit/Display
- 55: Schnittstelle
- 56: Rechnereinheit

## Patentansprüche

1. Verfahren zur Untersuchung eines Gegenstandes, insbesondere hinsichtlich dessen Oberflächengestalt, bei dem
- ein mehrere Lichtquellen enthaltendes, eine Beleuchtungsöffnung aufweisendes Gehäuse (30) der Vorrichtung und der Gegenstand (20) zueinander eine Stellung einnehmen,
- ein Oberflächensegment (22) des Gegenstandes (20) durch die Beleuchtungsöffnung des Gehäuses (30) nacheinander unter verschiedenen Einfallswinkeln mit Licht bestrahlt wird,
- das von dem Oberflächensegment (22) je Einfallswinkel abstrahlende Licht von mindestens einem Bildsensor (40) erfasst wird,
- je Einfallswinkel und je Bildsensor (40) von dem Oberflächensegment (22) mindestens eine Bilddatenmenge erzeugt wird, und
- aus mindestens einer ersten Bilddatenmenge, die von mindestens einer unter einem erstern schrägen bis flachen Einfallswinkel ausgerichteten Lichtquelle erster Art erzeugt wurde, Gestaltmerkmale und aus mindestens einer zweiten Bilddatenmenge, die von mindestens einer unter einem, von dem ersten Einfallswinkel verschiedenen, zweiten schrägen bis senkrechten Einfallswinkel ausgerichteten Lichtquelle zweiter Art erzeugt wurde, gestaltunabhängige Merkmale abgeleitet werden,
- zum Einnehmen der gegenseitigen Stellung der Gegenstand (20) ortsfest gehalten und das Gehäuse (30) freibeweglich von einer Bedienperson auf die Oberfläche (21) des Gegenstandes (20) annähernd lichtdicht angelegt oder unter Kontakt mit der Oberfläche (21) verschoben wird,
**dadurch gekennzeichnet,**
- **dass** vor der Ableitung von Gestaltmerkmalen aus der ersten Bilddatenmenge die erste Bilddatenmenge mit der zweiten Bilddatenmenge um verfälschende Einflüsse gestaltunabhängiger Merkmale reduziert wird.

2. Verfahren nach Anspruch 1, **dadurch gekennzeichnet, dass** die erste und die zweite Datenmenge von dem selben Bildsensor (40) erzeugt werden.

3. Verfahren nach Anspruch 1, **dadurch gekennzeichnet, dass** zur Erzeugung einer ersten Bilddatenmenge, aus der Gestaltmerkmale ableitbar sind, ein geometrisch definiertes Muster auf das Oberflächensegment (22) projiziert wird.

4. Verfahren nach Anspruch 1, **dadurch gekennzeichnet, dass** zur Erzeugung einer zweiten Bilddatenmenge, aus der gestaltunabhängige Merkmale ableitbar sind, Licht durch den Gegenstand (20) in das Gehäuse (30) transmittiert wird.

5. Vorrichtung zur Untersuchung eines Gegenstandes, insbesondere hinsichtlich dessen Oberflächengestalt mit
- einem Gehäuse (30), das eine zur Oberfläche (21) des Gegenstandes (20) gerichtete Beleuchtungsöffnung aufweist, wobei das Gehäuse (30) in Art eines transportablen Handgerätes ausgeführt und gegenüber dem ortsfesten Gegenstand (20) freibeweglich ist und unmittelbar auf bzw. über die Oberfläche (21) des Gegenstandes (20) annähernd lichtdicht anlegbar bzw. verschiebbar ist
- mindestens einer Lichtquelle einer ersten Art (42 a, 42b), welche mit ihrer optischen Achse im schrägen bis flachen Einfallswinkel zur Oberfläche (21) ausgerichtet ist,
- mindestens einer Lichtquelle einer zweiten Art (43 a, 43b), welche mit ihrer optischen Achse im von dem ersten Einfallswinkel verschiedenen schrägen bis senkrechten Einfallswinkel zur Oberfläche (21) ausgerichtet ist,
wobei die Lichtquellen der ersten Art (42 a, 42b)und wenigstens eine Lichtquelle der zweiten Art (43 a, 43b) innerhalb des Gehäuses (30) angeordnet sind und die Lichtquellen wenigstens artweise steuerbar sind,
- mindestens einem, das von der Oberfläche (21) abstrahlende Licht erfassenden Bildsensor (40)
- einer im Gehäuse angeordneten Steuer- und/oder Auswerteeinheit (50) , die mit den Lichtquellen der ersten Art (42 a, 42b) und wenigstens einer Lichtquelle der zweiten Art (43 a, 43b) und dem Bildsensor (40) verbunden ist, wobei die Steuer- und/oder Auswerteeinheit (50) ausgelegt ist, um aus dem von der Lichtquelle der ersten Art (42 a, 42b) stammenden, von der Oberfläche (21) reflektierten und vom Sensor (40) erfassten Licht eine erste Bilddatenmenge und aus dem von der Lichtquelle der zweiten Art (42 a, 42b) stammenden, von der Oberfläche (21) reflektierten und vom Sensor (40) erfassten Licht eine zweite Bilddatenmenge zu erzeugen
**dadurch gekennzeichnet,**
**dass** die Steuer- und/oder Auswerteeinheit (50) ausgelegt ist, um vor Ableitung von Gestaltmerkmalen aus der ersten Bilddatenmenge die erste Bilddatenmenge mit der zweiten Bilddatenmenge um verfälschende Einflüsse gestaltunabhängiger Merkmale zu reduzieren.

6. Vorrichtung nach Anspruch 5, **dadurch gekennzeichnet, dass** der Bildsensor (40) ein im Gehäuse (30) fest angeordneter Farbbildsensor ist und der Abstand zwischen der im Gehäuse angeordneten mindestens einen Lichtquelle zweiter Art (43 a, 43 b) und der Oberfläche (21) größer oder gleich dem Abstand zwischen dem Lichtsensor (40) und der Oberfläche (21) ist.

7. Vorrichtung nach Anspruch 5, **dadurch gekennzeichnet, dass** der Bildsensor (40) so angeordnet ist, dass dieser mit seiner optischen Achse direkt oder über eine Umlenkeinrichtung in einem Winkel von 60° bis 90° zur Oberfläche (21) ausgerichtet ist.

8. Vorrichtung nach Anspruch 5, **dadurch gekennzeichnet, dass** der Einfallswinkel der Lichtquellen erster Art 5 bis 20°, vorzugsweise 7°, und der Einfallswinkel der Lichtquellen zweiter Art 45° bis 90°, vorzugsweise 60° groß ist.

9. Vorrichtung nach Anspruch 5, **dadurch gekennzeichnet, dass** den Lichtquellen erster und zweiter Art jeweils eine, einen Abstrahlwinkel vorgebende Optik vorgeschaltet sind.

10. Vorrichtung nach Anspruch 9, **dadurch gekennzeichnet, dass** die Abstrahlwinkel der Lichtquellen erster Art schmal oder nahezu Null sind.

11. Vorrichtung nach Anspruch 5, **dadurch gekennzeichnet, dass** die Lichtquellen erster und/oder zweiter Art in verschiedenen Horizontalrichtungen auf die Oberfläche (21) abstrahlen.

12. Vorrichtung nach Anspruch 5, **dadurch gekennzeichnet, dass** an Stelle der Lichtquellen Umlenkeinrichtungen mit diesen zugeordneten Lichtquellen vorgesehen sind.

13. Vorrichtung nach Anspruch 5, **dadurch gekennzeichnet, dass** die Lichtquellen der ersten Art (42 a, 42 b) und der zweiten Art (43 a, 43 b, 44) einzeln, kombiniert oder artweise ein- und ausschaltbar oder dimmbar sind.

14. Vorrichtung nach Anspruch 5, **dadurch gekennzeichnet, dass** einer Lichtquelle der ersten Art eine Blende mit einem geometrisch definierten Muster zugeordnet ist

15. Vorrichtung nach Anspruch 5, **dadurch gekennzeichnet, dass** eine Lichtquelle der zweiten Art (45) außerhalb des Gehäuses auf der dem Bildsensor (40) gegenüberliegenden Seite des Gegenstandes (20) angeordnet ist.

16. Vorrichtung nach Anspruch 5, **dadurch gekennzeichnet, dass** im Innern des Gehäuses (30) eine Stromversorgung (51) angeordnet ist.

17. Vorrichtung nach Anspruch 5, **dadurch gekennzeichnet, dass** die Stromversorgung über die Rechnereinheit (56) erfolgt.

18. Vorrichtung nach Anspruch 5, **dadurch gekennzeichnet, dass** ein Display und/oder eine Bedieneinheit (54) vorgesehen ist.

19. Vorrichtung nach Anspruch 5, **dadurch gekennzeichnet, dass** eine Schnittstelle (55) vorgesehen ist, über welche elektrische Signale zwischen der Steuer- und/oder Auswerteeinheit (50) mit einer externen Rechnereinheit (56) ausgetauscht werden können.

## Claims

1. Procedure for the examination of an object, in particular regarding its surface character, where
- a housing (30) containing several sources of light, a lighting aperture are positioned exhibiting housing (30) of the appliance and object (20) face each other,
- a surface segment (22) of object (20) is successively illuminated by the lighting aperture of housing (30) under various angles of incidence,
- the light radiating from surface segment (22) per angle of incidence is gathered by at least one image sensor (40)
- at least one image data set is produced per angle of incidence and for each image sensor (40) by surface segment (22), and
- shape characteristics are derived from at least one first image data set, produced by at least one source of light of a first type (42a, 42b), which is directed at a first oblique to flat angle of incidence to surface, and shape-independent characteristics are derived from at least one second image data set, produced by at least one source of light of a second type (43a, 43b), which is directed at a second oblique to vertical angle of incidence to surface other than the first angle of incidence to surface
specified as follows:
- the object (20) is kept stationary and housing (30) is mobile, to be placed onto surface (21) of object (20), close to light tight or moved by making contact with surface (21)
- by means of the second data set, the first image data set is reduced by misleading impacts of shape-independent characteristics before shape characteristics from the first image data set are derived.

2. Procedure according to claim 1, **characterized by** the fact that the first and the second data set are produced by the same image sensor (40).

3. Procedure according to claim 1, **characterized by** the fact that for the production of a first image data set, from which shape characteristics may be derived, a geometrically defined pattern is projected onto surface segment (22).

4. Procedure according to claim 1, **characterized by** the fact that for the production of a second image data set, from which shape-independent characteristics may be derived, light is transmitted through object (20) into housing (30).

5. Appliance for the examination of an object, especially regarding its surface character, with
- one housing (30), which exhibits a lighting aperture directed towards surface (21) of object (20), whereby the housing (30) is implemented as a portable hand device, which can be moved freely opposed to stationary object (20) and may be placed light tight directly on or respectively above surface (21) of object (20) or it can be moved respectively,
- at least one source of light of a first type (42a, 42b), which is directed with its optical axis at an oblique to flat angle of incidence to surface (21),
- at least one source of light of a second type (43a, 43b), which is directed with its optical axis at an oblique to vertical angle of incidence to surface (21) other than the first angle of incidence to surface, whereby sources of light of the first type (42a, 42b) and at least one source of light of the second type (43a, 43b) are arranged within housing (30) and the light sources may be controlled at least by type
- at least one image sensor (40) gathering the light radiated from surface (21)
- a control and/or analyzing unit (50) placed within the housing, connected with the light sources of the first type (42a, 42b) and with at least one light source of the second type (43a, 43b) and the image sensor (40),
whereby the control and/or analyzing unit (50) is designed to produce a first image data set of the light originating from the source of light of the first type (42a, 42b), reflected by the surface (21) and gathered by the image sensor (40), and a second image data set of the light originating from the source of light of the second type (43a, 43b), reflected by the surface (21) and gathered by the image sensor (40),
specified as follows:
- the control and/or analyzing unit (50) is designed to reduce the first image data set by means of the second image data set by misleading impacts of shape-independent characteristics before shape characteristics from the first image data set are derived.

6. Appliance according to claim 5, **characterized by** the fact that image sensor (40) is a color image sensor attached in housing (30) and the distance between at least one light source of a second type (43a, 43b) placed in the housing and surface (21) is larger or equals the distance between photosensor (40) and surface (21).

7. Appliance according to claim 5, **characterized by** the fact that image sensor (40) is arranged in a way that this is directly aligned with its optical axis or over a deflection mechanism at an angle of 60 to 90 degrees to surface (21).

8. Appliance according to claim 5, **characterized by** the fact that the angle of incidence of the light sources of the first type is 5 to 20 degrees, preferably 7 degrees and the angle of incidence of the light sources of the second type is 45 to 90 degrees, preferably 60 degrees.

9. Appliance according to claim 5, **characterized by** the fact that the light sources of the first and second type are each upstream of optics providing an angle of reflected beam.

10. Appliance according to claim 5, **characterized by** the fact that the angles of reflected beam of the light sources of the first type are narrow or almost zero.

11. Appliance according to claim 5, **characterized by** the fact that the light sources of the first and/or second type emit at various horizontal directions onto surface (21).

12. Appliance according to claim 5, **characterized by** the fact that in place of the light sources deflection mechanisms with these pertinent sources of light are designed.

13. Appliance according to claim 5, **characterized by** the fact that the light sources of the first type (42a, 42b) and the second type (43a, 43b, 44) may be switched on and off or dimmed individually, together or by type.

14. Appliance according to claim 5, **characterized by** the fact that a light source of the first type has a lens aperture with a geometrically defined pattern.

15. Appliance according to claim 5, **characterized by** the fact that a light source of the second type (45) is placed outside the housing at the side of object (20) opposite the image sensor.

16. Appliance according to claim 5, **characterized by** the fact that power supply (51) is located inside housing (30).

17. Appliance according to claim 5, **characterized by** the fact that power is supplied via computer unit (56).

18. Appliance according to claim 5, **characterized by** the fact that a display and/or a control unit (54) is designed.

19. Appliance according to claim 5, **characterized by** the fact that an interface (55) is designed, that allows an exchange of electric signals between the control and/or analysis unit (50) and an external computer unit (56).

## Revendications

1. Procédure d'étude d'un objet, en particulier de sa surface, où :
- un boîtier (30) contenant plusieurs sources lumineuses et une ouverture d'éclairage sont positionnés de manière à présenter le boîtier (30) de l'appareil et l'objet (20) face à face,
- une zone (22) de la surface de l'objet (20) est illuminée par la lumière de l'ouverture du boîtier (30) sous différents angles d'incidence successifs,
- la lumière émanant de la zone de la surface (22) par angle d'incidence est enregistrée par au moins un capteur d'image (40),
- au moins une série d'images est produite par angle d'incidence et pour chaque capteur d'image (40) par zone de surface (22), et
- des caractéristiques de forme sont obtenues à partir d'au moins une série d'images, produite par au moins une source de lumière d'un premier type (42a, 42b), dirigée en une première oblique par rapport à un angle d'incidence plat par rapport à la surface. Les caractéristiques indépendantes de la forme sont issues d'au moins une seconde série d'images, produite par au moins une source de lumière d'un deuxième type (43a, 43b), dirigée en une seconde oblique avec un angle d'incidence vertical par rapport à la surface différent du premier angle d'incidence par rapport à la surface.
Spécifiée comme suit :
- l'objet (20) est maintenu en position stationnaire et le boîtier (30) est mobile pour être placé sur la surface (21) de l'objet, presque étanche à la lumière ou déplacé en restant en contact avec la surface (21)
- La première série d'images est réduite au moyen de la seconde série d'images en les impacts falsifiants des caractéristiques indépendantes de la forme avant que les caractéristiques de forme de la première série d'images n'aient dérivé.

2. Procédure selon demande 1, **caractérisée par le fait que** la première et la seconde séries d'images sont produites par le même capteur d'image(40).

3. Procédure selon demande 1, **caractérisée par le fait que** pour la production d'une première série d'images, dont les caractéristiques de forme peuvent dériver, un faisceau de calibre géométriquement défini est projeté sur la zone de surface(22).

4. Procédure selon demande 1, **caractérisée par le fait que** pour la production d'une seconde série d'images, dont les caractéristiques indépendantes de la forme peuvent dériver, la lumière est transmise à travers l'objet (20) dans le boîtier (30).

5. Appareil pour l'examen d'un objet, et particulièrement ses caractéristiques de surface, comprenant :
- un boîtier (30) présentant une ouverture d'éclairage dirigée vers la surface (21) de l'objet (20) et conçu comme un appareil portable pouvant être déplacé librement par opposition à un objet stationnaire (20) . Ce boîtier (30) peut être posé directement sur la surface (21) de l'objet (20) de manière à ne pas laisser entrer la lumière, ou bien au-dessus de la surface (21) de l'objet (20), ou encore être déplacé,
- au moins une source lumineuse d'un premier type (42a, 42b), qui est dirigée avec son axe optique à l'oblique d'un angle d'incidence plat par rapport à la surface (21),
- au moins une source lumineuse d'un second type (43a, 43b), qui est dirigée avec son axe optique à l'oblique d'un angle d'incidence vertical par rapport à la surface (21) autre que le premier angle d'incidence par rapport à la surface, tandis que les sources lumineuses de premier type (42a, 42b) et au moins une source lumineuse de deuxième type (43a, 43b) sont disposées dans le boîtier (30) et que les sources lumineuses peuvent être contrôlées par type,
- au moins un capteur d'image (40) enregistrant la lumière émise par la surface (21),
- une unité de contrôle et/ou d'analyse (50) située dans le boîtier, connectée aux sources lumineuses de premier type (42a, 42b) et à au moins une source lumineuse de second type (43a, 43b) et au capteur d'image (40),
où l'unité de contrôle et/ou d'analyse (50) est conçue pour produire une première série d'images de la lumière provenant de la source lumineuse de premier type (42a, 42b), réfléchie par la surface (21) et enregistrée par le capteur d'image (40), et une seconde série d'images de la lumière provenant de la source lumineuse du second type (43a, 43b),
réfléchie par la surface (21) et enregistrée par le capteur d'image(40),
Spécifié comme suit :
- l'unité de contrôle et/ou d'analyse (50) est conçue pour réduire la première série d'images au moyen de la seconde série d'images en les impacts falsifiants des caractéristiques indépendantes de la forme avant que les caractéristiques de forme de la première série de données d'image n'aient dérivé.

6. Appareil selon demande 5, **caractérisé par le fait que** le capteur d'image (40) est un capteur d'image couleur fixé dans le boîtier (30), et que la distance entre au moins une des sources lumineuses de second type (43a, 43b) placée dans le boîtier et en surface (21) est supérieure ou égale à la distance entre le capteur photo (40) et la surface (21).

7. Appareil selon demande 5, **caractérisé par le fait que** le capteur d'image (40) est disposé de manière à être directement aligné avec son axe optique ou sur un mécanisme de déflexion à un angle de 60 à 90 degrés par rapport à la surface (21).

8. Appareil selon demande 5, **caractérisé par le fait que** l'angle d'incidence des sources lumineuses de premier type est de 5 à 20 degrés, de préférence 7 degrés et que l'angle d'incidence de la source lumineuse de second type est de 45 à 90 degrés, de préférence 60 degrés.

9. Appareil selon demande 5, **caractérisé par le fait que** les sources lumineuses de premier et de second type sont toutes en amont de l'optique, créant un angle de réflexion du faisceau.

10. Appareil selon demande 5, **caractérisé par le fait que** les angles de réflexion du faisceau des sources lumineuses de premier type sont faibles or proches de zéro.

11. Appareil selon demande 5, **caractérisé par le fait que** les sources lumineuses de premier et / ou de second type émettent dans diverses directions horizontales sur la surface (21).

12. Appareil selon demande 5, **caractérisé par le fait que**, à la place des sources lumineuses, des mécanismes de déflexion sont conçus avec ces sources lumineuses pertinentes.

13. Appareil selon demande 5, **caractérisé par le fait que** les sources lumineuse de premier type (42a, 42b) et de second type (43a, 43b, 44) peuvent être activées et désactivées ou diminuées individuellement, conjointement ou par type.

14. Appareil selon demande 5, **caractérisé par le fait qu'**une source lumineuse du premier type a une ouverture de lentille dont le calibre est défini géométriquement.

15. Appareil selon demande 5, **caractérisé par le fait qu'**une source lumineuse de second type (45) est placée en dehors du boîtier sur le côté de l'objet (20) en face du capteur d'image.

16. Appareil selon demande 5, **caractérisé par le fait que** l'alimentation électrique (51) est située à l'intérieur du boîtier (30).

17. Appareil selon demande 5, **caractérisé par le fait que** l'alimentation électrique est fournie par un ordinateur (56).

18. Appareil selon demande 5, **caractérisé par le fait qu'**il intègre un écran et/ou une unité de contrôle (54).

19. Appareil selon demande 5, **caractérisé par le fait qu'**il intègre une interface (55) permettant un échange de signaux électriques entre l'unité de contrôle et / ou d'analyse (50) et une un ordinateur externe (56).
